(19)

Europäisches Patentamt
European Patent Office
Office européen des brevets

(11) **EP 2 489 755 A1**

(12) **EUROPEAN PATENT APPLICATION**
published in accordance with Art. 153(4) EPC

(43) Date of publication:
**22.08.2012 Bulletin 2012/34**

(51) Int Cl.:
*C22F 1/05* (2006.01)   *B21J 5/00* (2006.01)
*B21K 1/18* (2006.01)   *B22D 11/00* (2006.01)
*B22D 11/20* (2006.01)   *C22C 21/02* (2006.01)
*C22C 21/06* (2006.01)

(21) Application number: **10823464.2**

(22) Date of filing: **15.10.2010**

(86) International application number:
**PCT/JP2010/068124**

(87) International publication number:
**WO 2011/046196 (21.04.2011 Gazette 2011/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.10.2009 JP 2009239295**

(71) Applicant: **Showa Denko K.K.
Tokyo 105-8518 (JP)**

(72) Inventor: **OKAMOTO, Yasuo
Kitakata-shi
Fukushima 966-0845 (JP)**

(74) Representative: **Viering, Jentschura & Partner
Grillparzerstrasse 14
81675 München (DE)**

(54) **PROCESS FOR PRODUCING BRAKE PISTON**

(57)    A brake piston having required mechanical strength is produced through fewer steps than in conventional processes. An aluminum alloy containing Si and Mg, wherein the aluminum alloy has a Si concentration ($C_{Si}$ mass%) and a Mg concentration ($C_{Mg}$ mass%) falling within a range surrounded by four points A (0.75, 1.25), B (1.4, 1), C (1.4, 0.6), and D (0.75, 0.85) in terms of a relationship thereof ($C_{Si}$, $C_{Mg}$), and further has a Cu concentration of 0.07 to 0.9 mass%, a Mn concentration of 0.1 to 0.9 mass%, a Ti concentration of 0.005 to 0.15 mass%, a Cr concentration of 0.2 mass% or less, and a Fe concentration of 0.5 mass%, the balance being Al and inevitable impurities is cast to obtain a rod-shaped ingot. The rod-shaped ingot, without being subjected to a homogenization treatment, is straightened within 3 (three) days after the casting. The straightened rod-shaped ingot is cut into a given thickness to obtain a forging raw material. This forging raw material, without being subjected to annealing, is cold-forged at a reduction rate of 25 to 90% within 7 (seven) days after the casting of the rod-shaped ingot into a cup shape, which is subjected to age-hardening without being subjected to a solution heat treatment.

```
┌─────────────────────┐
│       Casting        │
└─────────────────────┘
           │
┌─────────────────────┐
│    Straightening     │
└─────────────────────┘
           │
┌ ─ ─ ─ ─ ─ ─ ─ ─ ─ ─ ┐
│       Peeling        │
└ ─ ─ ─ ─ ─ ─ ─ ─ ─ ─ ┘
           │
┌ ─ ─ ─ ─ ─ ─ ─ ─ ─ ─ ┐
│     Inspection       │
└ ─ ─ ─ ─ ─ ─ ─ ─ ─ ─ ┘
           │
┌─────────────────────┐
│       Cutting        │
└─────────────────────┘
           │
┌ ─ ─ ─ ─ ─ ─ ─ ─ ─ ─ ┐
│      Boderizing      │
└ ─ ─ ─ ─ ─ ─ ─ ─ ─ ─ ┘
           │
┌─────────────────────┐
│    Cold forging      │
└─────────────────────┘
           │
┌─────────────────────┐
│        Aging         │
└─────────────────────┘
           │
┌ ─ ─ ─ ─ ─ ─ ─ ─ ─ ─ ┐
│  Mechanical working  │
└ ─ ─ ─ ─ ─ ─ ─ ─ ─ ─ ┘
           │
┌ ─ ─ ─ ─ ─ ─ ─ ─ ─ ─ ┐
│  Anodizing treatment │
└ ─ ─ ─ ─ ─ ─ ─ ─ ─ ─ ┘
```

FIG.2

EP 2 489 755 A1

**Description**

**TECHNICAL FIELD**

The present invention relates to a process for producing a brake piston by means of cold forging.

**BACKGROUND TECHNIQUE**

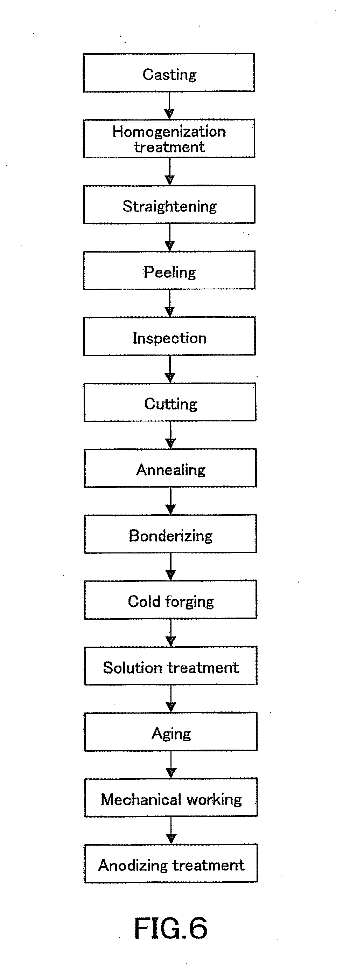

In recent years, in a brake disk for a vehicle, such as, e.g., a four-wheel vehicle or a two-wheel vehicle, for the purpose of attaining higher performance and/or lower-fuel consumption, a brake piston of aluminum alloy has been employed. Such a brake piston is a slide member, which is required to have excellent mechanical strength. The cup-shaped brake piston 1 shown in Fig. 1 is one example of such slide members (see Patent Document 1). In producing such a cup-shaped brake piston, conventionally, a billet was extruded and then drawn into a rod-shaped raw material. Thereafter, the raw material was subjected to a solution treatment and also to an aging treatment to thereby obtain a given mechanical strength, and then formed into a cup-shape by mechanical working.
The aforementioned production method, however, was extremely poor in material yield, and therefore there has been proposed a method in which shaping into a cup-shape is performed by forging to improve material yield and a heat treatment is performed to obtain predetermined mechanical strength (see Patent Document 2).
The slide member described in Patent Document 2 is a member in which the particle diameter and the number of eutectic Si particles dispersed in a matrix of an Al-Si series alloy formed article are regulated and that the thickness and the hardness of the anode oxide film are also regulated. The production method, as described in the paragraph [0070], includes the steps of: casing a rod member of aluminum alloy; homogenizing the rod member; peeling the cast surface of the homogenized rod member; cutting the peeled member into a given length; annealing the cut member; bonderizing the annealed member; forging the bonderized member into a cup-shape; subjecting the cup-shaped member to a T6 treatment (solution treatment and subsequent aging treatment); subjecting the T6 treated forged member to mechanical working (to improve the dimensional accuracy and remove distorted portions caused during the solution treatment); and then anodizing the machined member. In cases where a member obtained by cutting a rod-shaped member into a given thickness is used as a forging raw material, it is normally performed to correct/straighten the rod-shaped member before execution of peeling and perform inspection after execution of the peeling. Fig. 6 shows the flow of the aforementioned steps.
Further, as a forging raw material, there is a case to use a material obtained by casting a billet, homogenizing the billet, extruding the homogenized billet and drawing the extruded member into a rod member with a given diameter, and then cutting the rod-shaped member to have a given thickness. The forging raw material is annealed before cold forging in the same manner as in a raw material produced by cutting a cast rod-shaped member.

**PRIOR ARTS**

**PATENT DOCUMENTS**

Patent Document 1: Japanese Unexamined Laid-open Patent Application Publication No. 2002-70902 (JP-A-2002-70902)
Patent Document 2: Japanese Unexamined Laid-open Patent Application Publication No. 2004-232087 (JP-A-2002-232087) (see claims, and [0070])

**SUMMARY OF THE INVENTION**

**PROBLEMS TO BE SOLVED BY THE INVENTION**

The aforementioned production steps for a slide member include a plurality of heat treatments including a homogenization treatment of a cast rod member or a billet, annealing of a forging raw material, a solution treatment of a forged article, and an aging treatment. Thus, there is a problem that the number of steps is large and the production efficiency is poor. Also from the viewpoint of saving energy and reducing the amount of $CO_2$ emission, it is desired to reduce the number of heat treatment steps to be executed.

**MEANS FOR SOLVING THE PROBLEMS**

In view of the above technical background, the present invention provides a production method capable of producing a brake piston having required mechanical strength with fewer steps than in conventional methods.

A production method of a brake piston according to the present invention has a structure as recited in the following items [1] to [6].

A production method of a brake piston, comprising the steps of:

casting a rod-shaped ingot of aluminum alloy containing Si and Mg, wherein the aluminum alloy has a Si concentration ($C_{Si}$ mass%) and a Mg concentration ($C_{Mg}$ mass%) falling within a range surrounded by four points A (0.75, 1.25), B (1.4, 1), C (1.4, 0.6), and D (0.75, 0.85) in terms of a relationship thereof ($C_{Si}$, $C_{Mg}$), and further has a Cu concentration of 0.07 to 0.9 mass%, a Mn concentration of 0.1 to 0.9 mass%, a Ti concentration of 0.005 to 0.15 mass%, a Cr concentration of 0.2 mass% or less, and a Fe concentration of 0.5 mass%, the balance being Al and inevitable impurities;

straightening the rod-shaped ingot within 3 (three) days after the casting without being subjected to a homogenization treatment;

cutting the straightened rod-shaped ingot into a given thickness to obtain a forging raw material;

cold-forging the forging raw material at a reduction rate of 25 to 90% within 7 (seven) days after the casting of the rod-shaped ingot without being subjected to annealing to form a cup-shaped brake piston; and

age-hardening the formed cup-shaped brake piston without being subjected to a solution heat treatment.

[2] The production method of a brake piston as recited in the aforementioned Item 1, wherein the rod-shaped ingot is continuously cast at a casting rate of 200 m/min. or above.

[3] The production method of a brake piston as recited in the aforementioned Item 1 or 2, wherein a Rockwell hardness of the continuously cast rod-shaped ingot naturally aged for 30 days after the continuous casting is defined as a reference hardness, and wherein the straightening of the rod-shaped ingot is performed within a period of time during which a relative hardness of the rod-shaped ingot given by the following equation is 0.9 or less:

$$\text{[the relative hardness of the rod-shaped ingot]} = \text{[Rockwell hardness of the rod-shaped ingot]} / \text{[the reference hardness].}$$

[4] The production method of a brake piston as recited in any one of the aforementioned Items 1 to 3, wherein a Rockwell hardness of a continuously cast rod-shaped ingot naturally aged for 30 days after the continuous casting is defined as a reference hardness, and

wherein the straightening of the rod-shaped ingot is performed within a period of time during which a relative hardness of the rod-shaped ingot given by the following equation is 0.95 or less:

$$\text{[the relative hardness of the rod-shaped ingot]} = \text{[Rockwell hardness of the rod-shaped ingot]} / \text{[the reference hardness].}$$

**EFFECTS OF THE INVENTION**

According to the invention as recited in the aforementioned item [1], in producing a brake piston of aluminum alloy having a prescribed composition, the steps up to the cold forging are performed within a fewer number of days lapsed after the casting of the rod-shaped ingot. Concretely, straightening of the rod-shaped ingot is performed within 3 (three) days after the casting and cold forging of the forging raw material obtained by cutting the rod-shaped ingot is performed within 7 (seven) days after the casting. During the time periods, since the material is low in hardness and therefore the workability thereof is good, and good workability can be secured even without subjecting it to heat treatments before the straightening and before the cold forging. The brake piston formed by the cold forging is enhanced in hardness due to solution hardening and crystal dispersion by the elements contained in the aluminum alloy, and can have hardness required for a brake piston by the age-hardening without performing a solution treatment due to work hardening resulting from the cold-forging performed at a reduction rate of 25 to 90%. That is, without executing a homogenization treatment before the straightening, annealing before the cold forging, and a solution treatment after the cold forging, it is possible to produce a brake piston having required hardness. Therefore, as compared with a conventional production method in which heat treatments mentioned above are performed, the method of the present invention is higher in production efficiency and can reduce energy costs. Furthermore, not performing a solution treatment after the casting causes no quench distortions, rendering a machining step for removing distortions unnecessary, which reduces waist of material.

According to the invention as recited in the aforementioned item [2], the rod-shaped ingot is cooled quickly at the time of casting, which effectively exerts the hardness improving effect by the age-hardening.

According to the invention as recited in the aforementioned item [3], a Rockwell hardness of the continuously cast rod-shaped ingot naturally aged for 30 days after the continuous casting is defined as a reference hardness, and the relative hardness of the rod-shaped ingot at the time of the straightening and given by the equation of "the relative hardness of the rod-shaped ingot" = "Rockwell hardness of the rod-shaped ingot" / "the reference hardness" is 0.9 or less. The relative hardness supports that the straightening can be performed easily.

According to the invention as recited in the aforementioned item [4], a Rockwell hardness of a continuously cast rod-shaped ingot naturally aged for 30 days after the continuous casting is defined as a reference hardness, and the relative hardness of the forging material given by the equation of "the relative hardness of the forging material" = "Rockwell hardness of the forging material" / "the reference hardness" is 0.95 or less. The relative hardness supports that the straightening can be performed easily.

**BRIEF EXPLANATION OF THE DRAWINGS**

[Fig. 1] Fig. 1 is a perspective view of a brake piston.
[Fig. 2] Fig. 2 is a flowchart showing production steps of the brake piston according to the present invention.
[Fig. 3] Fig. 3 is a graph showing a hardness transition of a cast member.
[Fig. 4] Fig. 4 is a drawing showing a relation between a Si concentration and a Mg concentration in the aluminum alloy used in the present invention.
[Fig. 5] Fig. 5 is a cross-sectional view showing shape changes from a raw material to a forged member by cold forging.
[Fig. 6] Fig. 6 is a flowchart showing conventional production steps of a brake piston.

**[EMBODIMENTS FOR CARRYHING OUT THE INVENTION]**

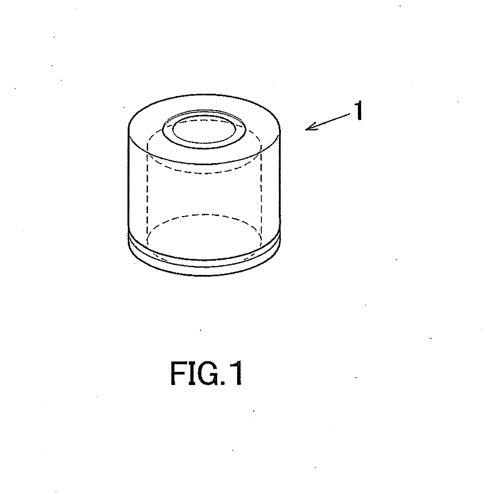

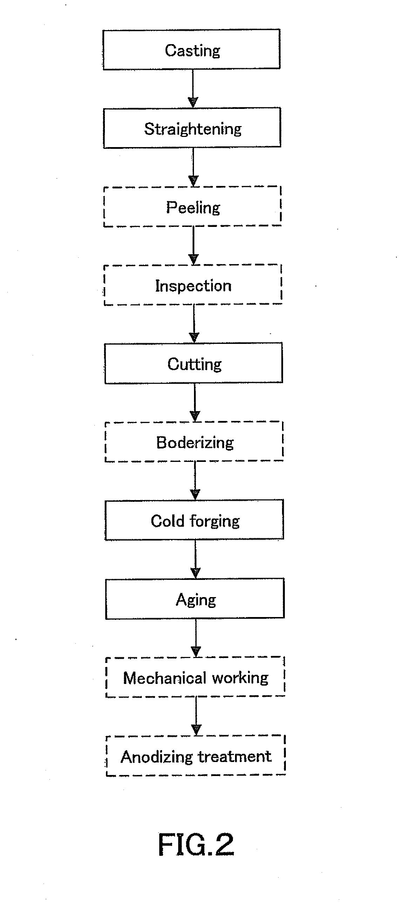

Fig. 1 shows an embodiment of a cup-shaped brake piston 1 to be produced in accordance with the present invention, and Fig. 2 is a flowchart showing production steps according to the present invention. The brake piston 1 is to be movably inserted into a hydraulic cylinder, for example, in a disk brake so as to press a friction pad against the brake disk with the opening end portion.

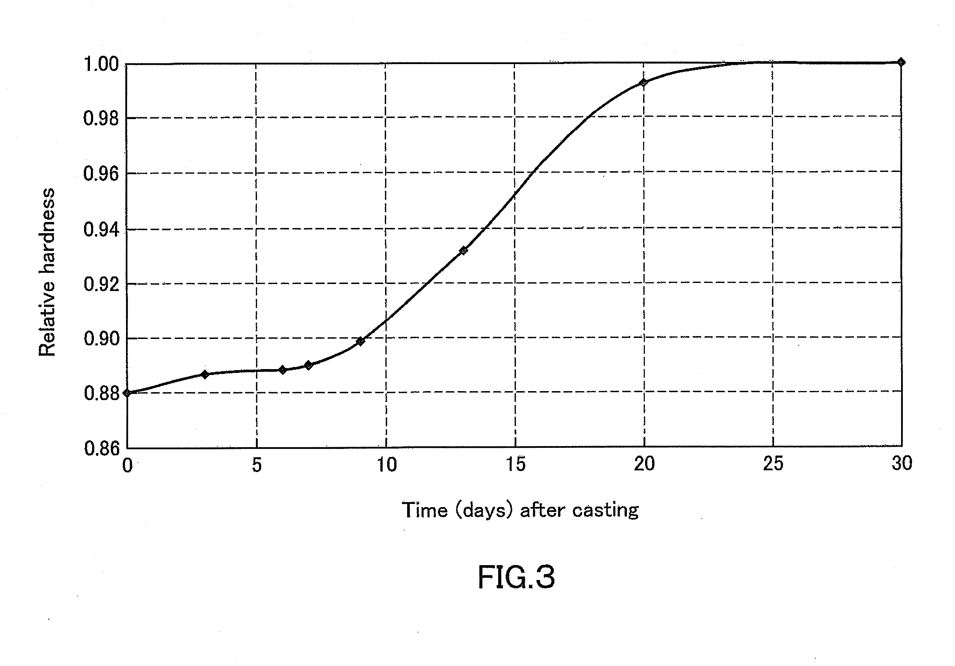

Aluminum alloy is low in hardness immediately after the casting, but increases in hardness by natural aging with time, and eventually has certain hardness. Fig. 3 shows a graph showing a transition of relative hardness of a cast member of aluminum alloy measured with time with respect to hardness of the cast member after 30 days. The aluminum alloy used to create this graph had a chemical composition consisting of Si: 1.06 mass%, Mg: 0.86 mass%, Cu: 0.4 mass%, Mn: 0.49 mass%, Cr: 0.14 mass%, Fe: 0.25 mass%, Ti: 0.015 mass%, and the balance being Al and inevitable impurities. A test piece was obtained by cutting a cast rod into a length of 20 mm immediately after the casting and machining the end face, and the RF hardness of the machined face was measured with a Rockwall hardness gauge. Immediately after the production of the test piece having a thickness of 20 mm, the HRF hardness thereof was initially measured immediately after the casting (after passing 0 day), and thereafter the HRF hardness of the same machined face was measured every day until the 30th day. The relative hardness was calculated by the following formula, wherein the HRF hardness on the 30th day, i.e., Rockwell hardness (HRF hardness) of the test piece naturally aged for 30 days after the continuous casting of the rod-shaped ingot, was defined as the reference hardness.

$$[\text{the relative hardness}] = [\text{Rockwall hardness on each measurement day}] / [\text{the reference hardness}]$$

Although Fig. 3 shows the hardness transition of the aluminum alloy having the aforementioned composition based on the actually measured data, the hardness of the aluminum alloy having the chemical composition defined by the present invention undergoes the same hardness transition pattern because of the following reasons.

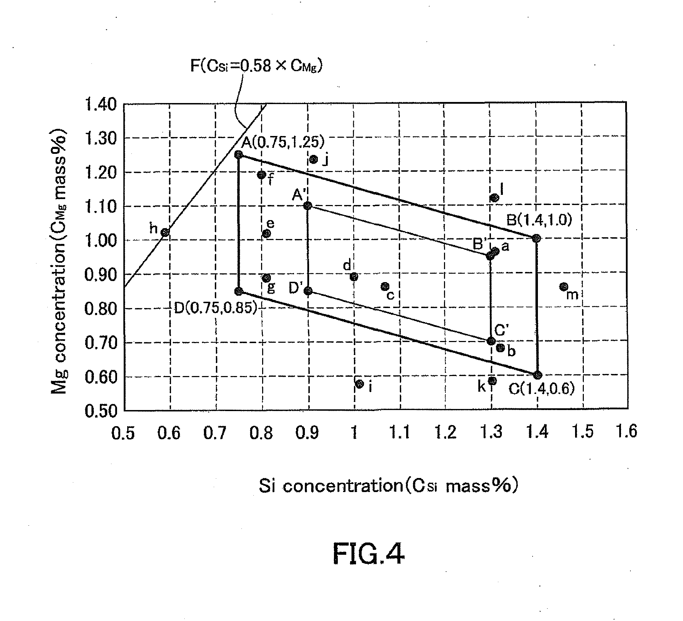

Fig. 4 shows a relation between the Si concentration ($C_{Si}$ mass%) and the Mg concentration ($C_{Mg}$) in the aluminum alloy, and the range surrounded by the 4 (four) points of A (0.75, 1.25), B (1.4, 1), C (1.4, 0.6), and D (0.75, 0.85) shows the Si concentration and the Mg concentration of the aluminum alloy. The straight line F depicts the formula F showing the relation of the Si concentration ($C_{Si}$ mass%) and the Mg concentration ($C_{Mg}$ mass%) forming $Mg_2Si$ crystals.

$$\text{Si concentration } (C_{Si}) = [\text{Si atomic weight} / (\text{Mg atomic weight} \times 2)] \times \text{Mg concentration } (C_{Mg} \text{ mass\%}) = 0.58 \times \text{Mg concentration } (C_{Mg}) \quad \ldots \text{ Formula F}$$

As shown Fig. 4, the aluminum alloy each used in the present invention is an Al-Mg-Si series alloy in which the Si concentration exceeds 0.58 x Mg concentration and contains excessive Si with respect to Mg. For this reason, the aluminum alloy used in the present invention has an aging behavior similar to that of the aluminum alloy in which the hardness transition shown in Fig. 3 was actually measured, and undergoes the hardness transition in the same pattern as shown in Fig. 3 after the continuous casting.

Fig. 3 shows that the aluminum alloy is low in hardness for a few days after the casting. Focusing attention on the fact that the hardness increases from a few days after the casting, in the present invention, processing up to the cold forging are performed within fewer days after the casting during which the hardness is low and the workability is excellent, and no heat treatment prior to processing which had been conventionally executed is performed. According to a conventional production process, a homogenization treatment was performed before straightening and annealing was performed before cold forging (see Fig. 6). The reasons for performing a heat treatment before plastic forming were to uniformize the workability of the raw material because there was a case in which a raw material increased in hardness after a long time has passed since the casting was used or a case in which raw materials different in hardness due to the difference of elapsed time were processed by the same operation. In other words, no attention was conventionally paid to hardness transition of a raw material to be processed. In return for it, uniformizing by heat treatments before processing was performed as essential processing.

In a conventional method, the reasons for requiring a homogenization treatment of a rod-shaped ingot, annealing of a forging raw material and a solution treatment of a forged member as essential steps are as follows. Simply omitting a homogenization treatment of a rod-shaged ingot renders a straightening process difficult since the ingot is still high in hardness. Furthermore, simply omitting annealing of the forging raw material makes a forging process by cold forging difficult since the forging raw material is still high in hardness. In addition, simply omitting a solution treatment of a forged member for the purpose of simplifying heat treatment processing results in non-annealing, which in turn deteriorates the product strength.

On the other hand, in the present invention, the technical concept has been changed from conventional steps. The technical problem to be solved by the present invention is to produce a product having preferable hardness with the maximum help of a quench hardening effect due to a rapid cooling effect during the continuous casting without preforming a solution treatment. To solve the problem, heat treatments (homogenizing treatment and annealing), which deteriorate quench hardening due to a rapid cooling effect during the continuous casting, are omitted to attain enhanced strength, and execution timings for straightening and cold forging are defined based on the elapsed time from the casting to secure excellent workability by performing straightening and cold forging within a period of time during which the hardness is kept low, without performing heat treatments before the processing. Furthermore, the alloy composition is adjusted to improve the strength. Further, a raw material shape is designed so as to increase the reduction rate during the cold forging to attain enhanced strength by the work hardening. Specifically, by defining the alloy composition and setting the timings for the straightening and cold forging from the casting as defined in the present invention, the straightening and cold forging could have been performed without any problem and that a brake piston material with satisfactory strength could have been produced.

The present invention defines the timing for straightening the rod-shaped ingot and the timing for cold-forging the forging material by the elapsed time after the continuous casting or the material hardness at the time of processing, or by both the elapsed time after the continuous casting and the material hardness at the time of processing.

The present invention can be realized by a brake piston production method including

a straightening step for straightening a rod-shaped ingot within 3 (three) days after the casting, wherein the straightening step follows a casting step,

a cutting step for cutting the straightened rod-shaped ingot into a given thickness to obtain a forging raw material,

a forging step for forming a cup-shaped brake piston by cold-forging the forging raw material at a reduction rate of 25 to 90% within 7 (seven) days after the casting of the rod-shaped ingot, wherein the forging step follows the cutting step, and an age-hardening step for age-hardening the formed brake piston, wherein the age-hardening step follows the forging step.

Hereinafter, the present invention will be detailed. [Chemical composition of aluminum alloy]

The aluminum alloy used in the present invention includes Si, Mg, Cu, and Mn, wherein Ti, Cr and Fe are regulated, and the balance being Al and inevitable impurities.

Si and Mg are elements to be added to obtain strength required for a brake piston, and Fig. 4 shows the relation between a Si concentration ($C_{Si}$ mass %) and a Mg concentration ($C_{Mg}$ mass%) . The Si concentration ($C_{Si}$ mass%) and the Mg concentration ($C_{Mg}$ mass%) are regulated so as to fall within a range surrounded by four points A (0.75, 1.25), B (1.4, 1), C (1.4, 0.6), and D (0.75, 0.85) in terms of a relationship of these concentrations ($C_{Si}$, $C_{Mg}$). From the aforementioned A, B, C, and D, the possible range of the Si concentration ($C_{Si}$ mass%) is 0.75 to 1.4 mass%, the possible range of the Mg concentration ($C_{Mg}$ mass%) is 0.6 to 1.25 mass%. If the Si concentration is less than 0.75 mass% or the Mg concentration is less than 0.60 mass%, the strength enhancing effect can be less expected, resulting in insufficient strength. On the other hand, if the Si concentration exceeds 1.4 mass% or the Mg concentration exceeds 1.25 mass%, the workability at the straightening and cold-forging steps deteriorates, causing processing defects. In order to attain both the excellent strength and the excellent workability, it is required for both the concentrations to fall within the range surrounded by the four points of A, B, C, and D.

In Fig. 4, the formula showing the straight line passing two points can be calculated as follows:

The straight line passing the points A and B: $C_{Mg} = -0.385 \times C_{Si} + 1.538$

The straight line passing the points B and C: $C_{Mg} = 1.4$

The straight line passing the points C and D: $C_{Mg} = -0.385 \times C_{Si} + 1.138$

The straight line passing the points D and A: $C_{Mg} = 0.75$

Accordingly, the Si concentration ($C_{Si}$ mass%) and the Mg concentration ($C_{Mg}$ mass%) according to the present invention fall within the range satisfying the following four formulas (i), (ii), (iii), and (iv):

(i) $C_{Mg} \leqq -0.385 \times C_{Si} + 1.538$
(ii) $C_{Mg} \leqq 1.4$
(iii) $C_{Mg} \geqq -0.385 \times C_{Si} + 1.138$
(iv) $C_{Mg} \geqq 0.75$

The more preferable range can be suggested by a range surrounded by A' (0.9, 1.1), B' (1.3, 0.95), C' (1.3, 0.7), and D' (0.9, 0.85) (see Fig. 4).

Cu and Mn are also elements to be added to enhance the strength. If the Cu concentration is less 0.07 mass%, or the Mn concentration is less than 0.1 mass%, the strength enhancing effect can be less expected, resulting in insufficient strength. On the other hand, if the Cu concentration exceeds 0.9 mass% or the Mn concentration exceeds 0.9 mass%, the workability at the cold-forging step deteriorates, causing processing defects. The more preferable Cu concentration is 0.2 - 0.7 mass%, and the more preferable Mn concentration is 0.3 - 0.8 mass%.

Ti is an element to be added to miniaturize the cast structure to thereby enhance the workability at the cold-forging step. If the Ti concentration is less than 0.005 mass%, the aforementioned effect can be less expected. On the other hand, if it exceeds 0.15 mass%, coarse intermetallic compounds will be formed to deteriorate the workability at the cold-forging step. The more preferable Ti concentration is 0.008 - 0.1 mass%.

Cr and Fe are elements which deteriorate the workability at the cold forging step, and it is required to control such that the Cr concentration is 0.2 mass% or less and the Fe concentration is 0.5 mass% or less. The more preferable Cr concentration is 0.15 mass% or less, and the more preferable Fe concentration is 0.4 mass% or less.

The balance of the aluminum alloy containing the aforementioned elements falling within the aforementioned concentration ranges is Al and inevitable impurities.

[Production step]

In Fig. 2 showing the production steps according to the present invention, the steps each shown by a solid block are essential steps, and the steps each shown by a dashed block are arbitrary steps. Hereinafter, each step will be detailed with reference to the flowchart shown in Fig. 2.

(Casting)

A rod-shaped ingot of aluminum alloy having the aforementioned composition is cast. Although the casting method is not specifically limited, it is preferable that the casting method is a continuous casting method. A continuous casting can be either a horizontal type casting or a vertical type casting, and a hot-top casting is specifically recommended on the grounds that a great quenching effect can be expected due to the rapid cooling of the ingot and that metal texture having an even and fine casting surface can be obtained. It is preferable to perform the casting at a casting rate of 200 m/min. or higher because the increased casting rater causes rapid cooling of the ingot, resulting in an increased hardening enhancing effect due to aging. The more preferable casting rate is 250 m/min. or higher.

(Straightening)

The rod-shaped ingot is straightened to enhance the straightness. It is required to perform the straightening step before the peeling step for removing the surface of the straightened rod-shaped ingot in order to prevent a possible jam of the rod-shaped ingot in a peeling machine when inserted into the peeling machine to enhance the smooth feeding through the peeling machine. The straightening is performed within 3 days (72 hours) after the casting without performing a homogenization treatment. As shown in Fig. 3, the hardness on the 3rd day after the casting in a state of being left unattended at normal temperature is 0.90 or less in relative hardness with respect to the reference hardness on the 30th day, and therefore straightening can be performed without performing a homogenization treatment. If age-hardening develops over 3 days after the casting, it becomes difficult to straighten the ingot without performing a homogenization treatment. The more preferable timing for the straightening is within 2 days after the casting.

Furthermore, whether or not smooth straightening can be performed without performing a homogenization treatment is affected by the hardness at the time of the straightening, and therefore the timing for the straightening can be regulated by the hardness of the rod-shaped ingot. For example, it is preferable that the Rockwell hardness before the straightening is less than 76.3. For example, when the Rockwell hardness of the continuously cast rod-shaped ingot naturally aged for 30 days after the continuous casting is defined as a reference hardness, if it is within the period in which the relative hardness of the rod-shaped ingot defined by the following formula is 0.9 or less, the straightening can be performed without performing a homogenization treatment. Especially, if it is within a period in which the relative hardness is less than 0.889, the hardness is further lower, which is more suitable to the straightening. Furthermore, it is more preferable to satisfy both the Rockwell hardness condition and the relative hardness condition.

The relative hardness of the rod-shaped ingot=Rockwell hardness of the rod-shaped ingot/the reference hardness

In the present invention, the execution timing for the straightening of the rod-shaped ingot can be defined by either the elapsed days after the casting or Rockwell hardness and/or the relative hardness. Furthermore, when the straightening execution timing is provisionally set by the elapsed days after the casting, it can be confirmed by the Rockwell hardness and/or the relative hardness that the provisionally set straightening execution timing is suitable for the straightening.

The straightening method is not specifically limited, and the straightening can be performed by any well-known straightening method, such as, e.g., a method in which the straightening is performed by pinching the ingot by and between rollers.

(Peeling, Inspection)

The straightened rod-shaped ingot is subjected to peeling to remove the inhomogeneous portions of the surface thereof, and then subjected to following inspection. Such peeling and inspection are not essential steps of the present invention, and therefore the production method which does not include these steps can be covered by the present invention.

(Cutting)

The rod-shaped ingot is cut into a predetermined thickness to produce a forging material having a volume corresponding to the volume of a brake piston.

(Bonderizing treatment)

As a pretreatment for the cold forging, the forging raw material is subjected to a bonderizing treatment as a lubricating treatment to give a lubricating property to the surface. Such bonderizing treatment is not an essential step in the present invention, and therefore the case in which no bonderizing treatment is performed and the case in which a lubricating property is given by any other method can be covered by the present invention.

(Cold forging)

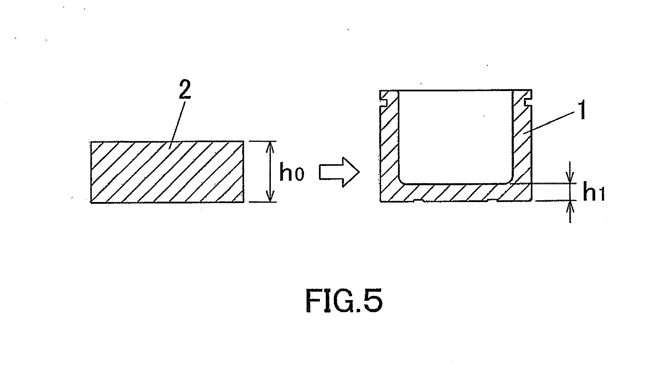

As illustrated in Fig. 5, the forging material 2 is subjected to cold-forging to form a cup-shaped brake piston 1.

The cold-forging is executed within 7 days (within 168 hours) after the casting of the rod-shaped ingot, without annealing the rod-shaped ingot. As shown in Fig. 3, the hardness on the 7th day after the casting is 0.95 or less in the relative hardness with respect to the reference hardness on the 30th day after the casting, and therefore it is possible to form a brake piston high in dimensional accuracy without performing annealing. If the age-hardening develops over 7 days after the casting, it becomes difficult to forge a brake piston high in dimensional accuracy. The more preferable execution timing for the cold-forging is within 5 days after the casting.

Furthermore, whether or not the cold forging can be smoothly performed without performing annealing is affected by the hardness at the time of the cold forging, and therefore the timing for the cold forging can also be defined by the hardness of the forging raw material. For example, it is preferable that the Rockwell hardness before the forging is less than 77.3. For example, when the Rockwell hardness of the continuously cast rod-shaped ingot naturally aged for 30 days after the continuous casting is defined as a reference hardness, if it is within the period in which the relative hardness of the rod-shaped ingot defined by the following formula is 0.95 or less, the cold forging can be performed without performing annealing. Especially, if it is within a period in which the relative hardness is less than 0.899, the hardness is further lower, which is more suitable to the cold forging. Furthermore, it is more preferable to satisfy both the Rockwell hardness condition and the relative hardness condition.

The relative hardness of the rod-shaped ingot=Rockwell hardness of the rod-shaped ingot/the reference hardness

In the present invention, the execution timing for the cold forging of the rod-shaped ingot can be defined by either the elapsed days after the casting or the relative hardness. Furthermore, when the cold forging execution timing is provisionally set by the elapsed days after the casting, it can be confirmed by the Rockwell hardness and/or the relative hardness that the provisionally set straightening execution timing is suitable to the cold forging.

Further, the reduction rate at the cold forging, which is calculated based on the following formula, is set to 25-90% to enhance the hardness by work hardening. If the reduction rate is less than 25%, the work hardening becomes insufficient, which makes it difficult to obtain hardness required for a brake piston. On the other hand, if the reduction rate exceeds 90%, forging defects, such as, e.g., forging cracks, readily occur. The preferable reduction rate is 50-70%. The forging is preferably a closed forging, not forging with burr.

$$\text{The reduction rate (\%)} = [(h_0 - h_1)/h_0] \times 100$$

where $h_0$ is a thickness of the forging raw material 2, and
$h_1$ is a thickness of the bottom portion of the forged brake piston 1

(Aging)

The cold forged brake piston is subjected to an aging treatment to enhance the hardness, without performing a solution treatment. Although the aging condition is not specifically limited, it is recommended for the preferable aging condition to hold the cold forged brake piston for 0.5 - 3 hours at 165-185 °C, more preferably 1 - 2.5 hours at 170 - 180 °C.

(Mechanical Working, Anodizing Treatment)

The age hardened brake piston is subjected to mechanical working for the purpose of improving the dimensional accuracy of the inner and outer diameters and the surface roughness. Furthermore, in order to improve the abrasion resistance, the brake piston is further subjected to a anodizing treatment to form a hard film on the surface thereof. Since the mechanical working and the anodizing treatment are not essential steps of the present invention, the case in which these processing are not performed is also covered by the present invention.

The brake piston produced in accordance with the present invention is enhanced in hardness by the solution hardening and crystal dispersion by the elements contained in the aluminum alloy, and is work-hardened by the cold forging performed at the prescribed reduction rate. Therefore, required hardness can be secured after the aging without performing a solution treatment. Normally, hardness required for a brake piston is 93 or more in Rockwell hardness, which can be secured by the present invention.

According to the method of the present invention, without performing three conventional heat treatments, i.e., a homogenization treatment before a straightening step, annealing before a cold forging step, and a solution treatment after a cold forging step performed in a conventional production processing, a brake piston having predetermined hardness can be produced. By omitting these three heat treatments, the production efficiency can be improved and the energy cost can be reduced. Furthermore, not performing a solution treatment after casting causes no generation of quench distortion, rendering a machining step for removing distortions unnecessary. Thus, the machining to be performed after the cold forging can be simply performed to improve the dimensional accuracy, resulting in a smaller cutting amount than a conventional cutting amount, which reduces waist of material.

**EXAMPLES**

Using aluminum alloys "a" to "m" of 13 types shown in Table 1, cup-shaped brake pistons were forged through different productions steps (except for Comparative Examples 1, 3-6, 10, and 15).

The relationship between the Si concentration and the Mg concentration in each aluminum alloy is shown in Fig. 4. The composition of each of the aluminum alloys "a" to "g" falls within the range specified by the present invention, and the composition of each of the aluminum alloys "h" to "m" deviates from the range specified by the present invention.

[Table 1]

| Alloy symbol | Used forged product | Chemical Composition of Aluminum Alloy | | | | | | | Preference Hardness (HRF) |
|---|---|---|---|---|---|---|---|---|---|
| | | Mg | Si | Cu | Mn | Cr | Fe | Ti | |
| a | Embodiments 1 to 3, 14, 15 Comparative Examples 1, 2, 20, 21 | 0.96 | 1.31 | 0.89 | 0.78 | 0.10 | 0.25 | 0.015 | 85.7 |
| b | Embodiment 4 | 0.68 | 1.32 | 0.88 | 0.79 | 0.11 | 0.25 | 0.015 | 79.9 |
| c | Embodiments 5, 6 Comparative Example 3 | 0.86 | 1.06 | 0.40 | 0.49 | 0.14 | 0.25 | 0.015 | 76.1 |
| d | Embodiments 7, 8 Comparative Example 4 | 0.89 | 1.00 | 0.07 | 0.58 | 0.12 | 0.25 | 0.014 | 79.1 |
| e | Embodiments 9, 10 Comparative Example 5 | 1.02 | 0.81 | 0.39 | 0.20 | 0.19 | 0.25 | 0.015 | 76.0 |
| f | Embodiment 11 | 1.19 | 0.80 | 0.40 | 0.20 | 0.20 | 0.25 | 0.015 | 75.5 |
| g | Embodiments 12, 13 Comparative Example 6 | 0.89 | 0.81 | 0.10 | 0.12 | 0.08 | 0.25 | 0.014 | 72.7 |
| h | Comparative Examples 7 to 11 | 1.03 | 0.59 | 0.24 | 0.19 | 0.01 | 0.25 | 0.015 | 61.6 |
| i | Comparative Examples 12 to 15 | 0.58 | 1.01 | 0.02 | 0.61 | 0.01 | 0.25 | 0.014 | 67.4 |
| j | Comparative Example 16 | 1.24 | 0.91 | 0.41 | 0.21 | 0.20 | 0.25 | 0.014 | 78.0 |
| k | Comparative Examples 17 | 0.59 | 1.30 | 0.87 | 0.77 | 0.11 | 0.25 | 0.015 | 72.6 |
| l | Comparative Example 18 | 1.12 | 1.31 | 0.88 | 0.79 | 0.10 | 0.25 | 0.015 | 87.4 |
| m | Comparative Example 19 | 0.86 | 1.46 | 0.89 | 0.78 | 0.78 | 0.25 | 0.015 | 88.8 |

[Production method]

As a common step in each Example, an aluminum alloy was continuously cast with a hot-top casting machine to obtain a rod-shaped ingot round in cross-section at a casting rate: 250 m/min. The Rockwell hardness of the rod-shaped ingot when the ingot was naturally aged for 30 days after the continuous casting, i.e., the reference hardness of the present invention, is shown in Table 1.

(Examples 1-13)

A rod-shaped ingot was straightened 3 days (72 hours) after the casting without performing a homogenizing treatment by pinching by and between correcting rolls. The straightened rod-shaped ingot was peeled, and the inspected rod-shaped ingot was cut into a short columnar member having a predetermined thickness to obtain a forging raw material 2.
The forging raw material 2 was subjected to a bonderizing treatment without being subjected to annealing, and then cold-forged 7 days (168 hours) after the casting to form a cup-shaped brake piston 1 as shown in Fig. 5. The reduction rate of the cold-forging was either one of 25%, 50%, and 71%. The reduction rate in each Example is shown in Table 2.

(Examples 14 and 15)

A cup-shaped brake piston 1 was formed in the same steps as in Example 1 except that the execution timing for the straightening and cold-forging were changed as described in Table 2.
The formed brake piston was subjected to an aging treatment by holding it for 2 hours at 175 °C without being subj ected to a solution treatment, and then subj ected to mechanical working to enhance the dimensional accuracy of the inner and outer diameters.

(Comparative Examples 1, 3-6, 10, and 15)

A rod-shaped ingot was pinched by and between correcting rolls 3 days (72 hours) after the casting, without being subjected to a homogenization treatment. The straightened rod-shaped ingot was peeled and the inspected rod-shaped ingot was cut into a short columnar member having a given thickness.
The columnar member was subjected to an aging treatment under the same conditions as in Examples without being subjected to a cold forging treatment and a solution treatment. In other words, in these Comparative Examples, only straightening, peeling, inspection, cutting and aging were performed.

(Comparative Example 2)

A brake piston was produced by the same steps as in Examples except that the straightening was performed 7 days (168 hours) after the casting and the cold forging was performed 13 days (312 hours) after the casting.

(Comparative Example 11)

Before subjecting a rod-shaped ingot to straightening to be performed 3 days after the casting, the rod-shaped ingot was subjected to a homogenization treatment of 560 °C x 7 hours. Before subjecting a forging rawmaterial to a bonderizing treatment, the forging raw material was subjected to annealing of 380 °C x 4 hours before bonderizing the forging raw material. After cold forging, the forged material was subjected to a solution treatment of 530 °C x 2.5 hours (solution treatment condition). After being water quenched, the forged material was subjected to an aging treatment of 180 °C x 6 hours. Thus, a brake piston was produced. The steps of this Comparative Example correspond to the conventional production steps shown in Fig. 6.

(Comparative Examples 7-9, 12-14, and 16-19)

A brake piston was produced by the same steps as in Examples. In these Comparative Examples, only the aluminum alloy composition deviates from the present invention.

(Comparative Examples 20, 21)

A brake piston 1 was produced by the same steps as in Example 1 except that the timings for performing the straightening and the cold forging were changed as described in Table 2.

(Hardness and Evaluation)

As for the rod-shaped ingot after the casting, the rod-shaped ingot before the straightening, the forging raw material before the forging, the brake piston after the forging, and the brake piston after the aging, the Rockwell hardness (HRF) was measured. As for Comparative Examples 1, 3-6, 10, and 15 in which no cold forging was performed, the hardness was measured after the straightening but before the aging treatment, and the measured hardness is shown in the column of the hardness before forging in Table 2. The relative hardness of the rod-shaped ingot before the straightening and that of the forging raw material before the forging were calculated by the following formula and listed in Table 2 together with the reference hardness of each alloy shown in Table 1.
The relative hardness of the rod-shaped ingot before

the straightening = Rockwell hardness of the rod-shaped ingot / the reference hardness

The relative hardness of the forging raw material before the forging = Rockwell hardness of the forging raw material / the reference hardness
The straightening performance, the forging performance, and the energy saving performance were evaluated based on the following standards.

(Straightening performance)

As for curvature of a rod-shaped ingot, it was evaluated as a good straightening performance (o) when the bent amount per 1, 000 mm length was straightened so as to fall within 2 mm or less, and evaluated as a poor straightening performance (x) when a bent amount exceeding 2 mm remained after the straightening.

(Forging performance)

As for the cold forged brake piston, it was evaluated as a good forging performance (o) when no underfill and/or sags were found, and evaluated as a poor forging performance (x) when underfill and/or sags were found.

(Energy saving performance)

Comparative Example 11 was evaluated as a poor energy saving performance (x) considering that the homogenization treatment, annealing and solution treatment were performed, and Examples in which no such treatments were performed were evaluated as a good energy saving performance.
Furthermore, it was checked whether or not it was required to perform cutting of thermal strain portions during the mechanical working after the aging.
Table 2 shows the schematic production steps and the evaluation results.
[Table 2]

| Embodiment | COMPOSITION | Manufacturing Process | | | | | | | | | | | Reference Hardness (HRF) | | | | | Relative hardness | | Straightening performance | Forging performance | Energy saving performance | Stress relief |
| | | Homogenization | Straightening timing | Peeling/Insection | Cutting | Annealing | Bonderizing | Cold Forging | | Solution Treatment | Aging Treatment | Mechanical working | After casting | Before straightening | Before forging | After forging | After aging | Before straightening | After forging | | | | |
| | | | | | | | | Time | Reduction ratio | | | | | | | | | | | | | | |
| 1 | a | - | 3days | ○ | ○ | - | ○ | 7 days | 71% | - | ○ | ○ | 75.4 | 76.0 | 76.3 | 98.7 | 102.9 | 0.887 | 0.891 | ○ | ○ | ○ | no |
| 2 | a | - | 3days | ○ | ○ | - | ○ | 7 days | 50% | - | ○ | ○ | 75.4 | 76.0 | 76.3 | 93.9 | 100.7 | 0.887 | 0.891 | ○ | ○ | ○ | no |
| 3 | a | - | 3days | ○ | ○ | - | ○ | 7 days | 25% | - | ○ | ○ | 75.4 | 76.0 | 76.3 | 85.9 | 97.3 | 0.887 | 0.891 | ○ | ○ | ○ | no |
| 4 | b | - | 3days | ○ | ○ | - | ○ | 7 days | 50% | - | ○ | ○ | 70.3 | 70.8 | 71.1 | 89.1 | 96.6 | 0.886 | 0.890 | ○ | ○ | ○ | No |
| 5 | c | - | 3days | ○ | ○ | - | ○ | 7 days | 71% | - | ○ | ○ | 67.0 | 67.6 | 67.9 | 95.4 | 99.6 | 0.888 | 0.892 | ○ | ○ | ○ | no |
| 6 | c | - | 3days | ○ | ○ | - | ○ | 7 days | 50% | - | ○ | ○ | 67.0 | 67.6 | 67.9 | 88.3 | 97.4 | 0.886 | 0.890 | ○ | ○ | ○ | no |
| 7 | d | - | 3days | ○ | ○ | - | ○ | 7 days | 71% | - | ○ | ○ | 69.6 | 70.1 | 70.4 | 93.9 | 98.6 | 0.886 | 0.890 | ○ | ○ | ○ | no |
| 8 | d | - | 3days | ○ | ○ | - | ○ | 7 days | 50% | - | ○ | ○ | 69.6 | 70.1 | 70.4 | 88.9 | 96.3 | 0.886 | 0.890 | ○ | ○ | ○ | no |
| 9 | e | - | 3days | ○ | ○ | - | ○ | 7 days | 71% | - | ○ | ○ | 66.9 | 67.2 | 67.5 | 92.6 | 97.0 | 0.884 | 0.888 | ○ | ○ | ○ | no |
| 10 | e | - | 3days | ○ | ○ | - | ○ | 7 days | 50% | - | ○ | ○ | 66.9 | 67.2 | 67.5 | 86.8 | 94.8 | 0.884 | 0.888 | ○ | ○ | ○ | no |
| 11 | f | - | 3days | ○ | ○ | - | ○ | 7 days | 50% | - | ○ | ○ | 66.4 | 66.9 | 67.3 | 86.3 | 94.4 | 0.887 | 0.892 | ○ | ○ | ○ | no |
| 12 | G | - | 3days | ○ | ○ | - | ○ | 7 days | 50% | - | ○ | ○ | 64.0 | 64.6 | 64.9 | 86.3 | 94.2 | 0.888 | 0.892 | ○ | ○ | ○ | no |
| 13 | g | - | 3days | ○ | ○ | - | ○ | 7 days | 71% | - | ○ | ○ | 64.0 | 64.6 | 64.9 | 90.4 | 96.4 | 0.888 | 0.892 | ○ | ○ | ○ | no |
| 14 | a | - | 2 days | ○ | ○ | - | ○ | 7 days | 50% | - | ○ | ○ | 75.4 | 75.8 | 76.3 | 93.7 | 100.6 | 0.885 | 0.891 | ○ | ○ | ○ | no |
| 15 | a | - | 3 days | ○ | ○ | - | ○ | 5 days | 50% | - | ○ | ○ | 75.4 | 76.0 | 76.2 | 93.8 | 100.6 | 0.887 | 0.889 | ○ | ○ | ○ | no |

[Table 2 contd.]

| no | no | no | no | no | no | no | no | no | no | yes | no | no | no | no | no | no | no | no | no | no |
|---|---|---|---|---|---|---|---|---|---|---|---|---|---|---|---|---|---|---|---|---|
| O | O | O | O | O | O | O | O | O | O | × | O | O | O | O | O | O | O | O | O | O |
| - | × | - | - | - | - | O | O | O | - | O | O | O | O | · | × | O | × | × | O | × |
| O | × | O | O | O | O | O | O | O | O | O | O | O | O | × | O | × | × | × | O |  |
| 0.891 | 0.902 | 0.892 | 0.890 | 0.888 | 0.888 | 0.911 | 0.911 | 0.911 | 0.911 | 0.911 | 0.907 | 0.907 | 0.907 | 0.907 | 0.892 | 0.891 | 0.891 | 0.889 | 0.889 | 0.899 |
| 0.887 | 0.891 | 0.888 | 0.886 | 0.884 | 0.884 | 0.903 | 0.903 | 0.903 | 0.903 | 0.903 | 0.898 | 0.898 | 0.898 | 0.898 | 0.886 | 0.887 | 0.886 | 0.885 | 0.889 | 0.887 |
| 91.8 | 100.9 | 85.2 | 83.9 | 82.7 | 82.1 | 91.3 | 88.3 | 82.4 | 75.5 | 96.7 | 82.4 | 89.5 | 83.7 | 77.1 | 95.4 | 91.1 | 102.0 | 104.1 | 100.7 | 100.8 |
| - | 94.2 | - | - | - | - | 85.1 | 78.0 | 67.8 | - | - | 87.6 | 80.6 | 70.6 | - | 88.1 | 84.9 | 95.4 | 96.7 | 93.9 | 94.1 |
| 76.3 | 77.3 | 67.9 | 70.4 | 67.5 | 64.9 | 56.1 | 56.1 | 56.1 | 56.1 | 56.1 | 61.1 | 61.1 | 61.1 | 61.1 | 69.5 | 64.7 | 77.9 | 78.9 | 76.3 | 77.0 |
| 76.0 | 76.3 | 67.6 | 70.1 | 67.2 | 64.6 | 55.6 | 55.6 | 55.6 | 55.6 | 55.6 | 60.5 | 60.5 | 60.5 | 60.5 | 69.1 | 64.4 | 77.4 | 78.5 | 76.2 | 76.0 |
| 75.4 | 75.4 | 67.0 | 69.6 | 66.9 | 64.0 | 54.2 | 54.2 | 54.2 | 54.2 | 54.2 | 59.3 | 59.3 | 59.3 | 59.3 | 68.6 | 63.9 | 76.9 | 78.1 | 75.4 | 75.4 |
| O | O | O | O | O | O | O | O | O | O | O | O | O | O | O | O | O | O | O | O | O |
| O | O | O | O | O | O | O | O | O | O | O | O | O | O | O | O | O | O | O | O | O |
| - | - | - | - | - | - | - | - | - | - | O | - | - | - | - | - | - | - | - | - | - |
| 0% | 50% | 0% | 0% | 0% | 0% | 71% | 50% | 25% | 0% | 50% | 71% | 50% | 25% | 0% | 50% | 50% | 50% | 50% | 50% | 50% |
| - | 13 days | - | - | - | - | 7 days | 7 days | 7 days | - | 7 days | 7 days | 7 days | 7 days | - | 7 days | 7 days | 7 days | 7 days | 7 days | 10 days |
| - | O | - | - | - | - | O | O | O | - | O | O | O | O | - | O | O | O | O | O | O |
| - | - | - | - | - | - | - | - | - | - | O | - | - | - | - | - | - | - | - | - | - |
| O | O | O | O | O | O | O | O | O | O | O | O | O | O | O | O | O | O | O | O | O |
| O | O | O | O | O | O | O | O | O | O | O | O | O | O | O | O | O | O | O | O | O |
| 3 days | 7 days | 3days | 3days | 3days | 3days | 3days | 3days | 3days | 3days | 3days | 3days | 3days | 3days | 3days | 3days | 3days | 3days | 3days | 5 days | 3days |
| - | - | - | - | - | - | - | - | - | - | O | - | - | - | - | - | - | - | - | - | - |
| a | a | c | d | e | g | h | h | h | h | h | i | i | i | i | j | k | l | m | a | a |
| 1 | 2 | 3 | 4 | 5 | 6 | 7 | 8 | 9 | 10 | 11 | 12 | 13 | 14 | 15 | 16 | 17 | 18 | 19 | 20 | 21 |

Comparative Example

From Table 2, in Examples 1-15, a hard brake piston having Rockwell hardness (HRF) exceeding 93 could be produced without performing a heat treatment before processing and/or a solution treatment after the casting.

On the other hand, in Comparative Examples 2, 20, and 21 in which the execution timing for the straightening and/or the cold forging was late, sufficient straightening of the rod-shaped ingot was not performed due to the poor workability, and the forging performance during the cold forging was also poor.

In Comparative Examples in which the reduction rate of the cold forging was 0%, the work hardening was insufficient, and the hardness was insufficient even after the aging.

Further, in Comparative Examples in which either the aluminum alloy composition or the reduction rate deviates from the range specified by the present invention, either one of insufficient strength, insufficient straightening due to the difficulty of working, and a forging defect was found.

In Comparative Example 11, since three heat treatments were added to Examples, the energy cost was high, and it was required to remove the thermal strain portions caused by the solution treatment.

In Comparative Example 16, although the hardness before the straightening and that before the forging were lower than that in Example 2 (the reduction rate of the cold goring was the same as in Comparative Example 16), the straightening performance and the forging performance were poor. This is considered because the amount of crystallized $Mg_2Si$ increased due to the high Si concentration and high Mg concentration in the alloy of Comparative Example 16. Crystallized $Mg_2Si$ does not contribute to increasing of the hardness of the aluminum base, but deteriorates the straightening performance and the forging performance, which caused the aforementioned result. In Comparative Example 18, the hardness of the aluminum alloy was high, which caused deterioration of the straightening performance and the forging performance. Furthermore, since the Si concentration was excessive as compared with Comparative Example 16, the hardness was further increased, resulting in deteriorated straightening performance and the forging performance. Also in Comparative Example 19, the high hardness of the aluminum alloy caused deteriorated straightening performance and forging performance. This Comparative Example deviates from the range of the Mg concentration and the Si concentration of the present invention surrounded by the points of A, B, C, and D in Fig. 4, and the increased amount of crystallized $Mg_2Si$ including excessive Si caused deteriorated straightening performance and forging performance.

This application claims priority to Japanese Patent Application No. 2009-239295 filed on October 16, 2009, and the entire disclosure of which is incorporated herein by reference in its entirety.

It should be understood that the terms and expressions used herein are used for explanation and have no intention to be used to construe in a limited manner, do not eliminate any equivalents of features shown and mentioned herein, and allow various modifications falling within the claimed scope of the present invention.

## INDUSTRIAL APPLICABILITY

The present invention can contribute to energy saving in producing a brake piston.

## DESCRIPTION OF THE REFERENCE NUMERALS

1    brake piston
2    forging raw material

## Claims

**1.** A production method of a brake piston, comprising the steps of:

casting a rod-shaped ingot of aluminum alloy containing Si and Mg, wherein the aluminum alloy has a Si concentration ($C_{Si}$ mass%) and a Mg concentration ($C_{Mg}$ mass%) falling within a range surrounded by four points A (0.75, 1.25), B (1.4, 1), C (1.4, 0.6), and D (0.75, 0.85) in terms of a relationship thereof ($C_{Si}$, $C_{Mg}$), and further has a Cu concentration of 0.07 to 0.9 mass%, a Mn concentration of 0.1 to 0.9 mass%, a Ti concentration of 0.005 to 0.15 mass%, a Cr concentration of 0.2 mass% or less, and a Fe concentration of 0.5 mass%, the balance being Al and inevitable impurities;
straightening the rod-shaped ingot within 3 (three) days after the casting without being subjected to a homogenization treatment;
cutting the straightened rod-shaped ingot into a given thickness to obtain a forging raw material;
cold-forging the forging raw material at a reduction rate of 25 to 90% within 7 (seven) days after the casting of the rod-shaped ingot without being subjected to annealing to form a cup-shaped brake piston; and

age-hardening the formed cup-shaped brake piston without being subjected to a solution heat treatment.

2. The production method of a brake piston as recited in claim 1, wherein the rod-shaped ingot is continuously cast at a casting rate of 200 m/min or more.

3. The production method of a brake piston as recited in claim 1 or 2,
   wherein a Rockwell hardness of the continuously cast rod-shaped ingot naturally aged for 30 days after the continuous casting is defined as a reference hardness, and
   wherein the straightening of the rod-shaped ingot is performed within a period of time during which a relative hardness of the rod-shaped ingot given by the following equation is 0.9 or less:

   $$[\text{the relative hardness of the rod-shaped ingot}] = [\text{Rockwell hardness of the rod-shaped ingot}] / [\text{the reference hardness}].$$

4. The production method of a brake piston as recited in any one of claims 1 to 3,
   wherein a Rockwell hardness of a continuously cast rod-shaped ingot naturally aged for 30 days after the continuous casting is defined as a reference hardness, and
   wherein the straightening of the rod-shaped ingot is performed within a period of time during which a relative hardness of the rod-shaped ingot given by the following equation is 0.95 or less:

   $$[\text{the relative hardness of the rod-shaped ingot}] = [\text{Rockwell hardness of the rod-shaped ingot}] / [\text{the reference hardness}].$$

FIG.1

FIG.2

FIG.3

FIG.4

FIG.5

```
┌─────────────────────┐
│       Casting       │
└─────────────────────┘
          │
          ▼
┌─────────────────────┐
│   Homogenization    │
│      treatment      │
└─────────────────────┘
          │
          ▼
┌─────────────────────┐
│    Straightening    │
└─────────────────────┘
          │
          ▼
┌─────────────────────┐
│       Peeling       │
└─────────────────────┘
          │
          ▼
┌─────────────────────┐
│     Inspection      │
└─────────────────────┘
          │
          ▼
┌─────────────────────┐
│       Cutting       │
└─────────────────────┘
          │
          ▼
┌─────────────────────┐
│      Annealing      │
└─────────────────────┘
          │
          ▼
┌─────────────────────┐
│     Bonderizing     │
└─────────────────────┘
          │
          ▼
┌─────────────────────┐
│    Cold forging     │
└─────────────────────┘
          │
          ▼
┌─────────────────────┐
│  Solution treatment │
└─────────────────────┘
          │
          ▼
┌─────────────────────┐
│        Aging        │
└─────────────────────┘
          │
          ▼
┌─────────────────────┐
│  Mechanical working │
└─────────────────────┘
          │
          ▼
┌─────────────────────┐
│ Anodizing treatment │
└─────────────────────┘
```

# FIG.6

| INTERNATIONAL SEARCH REPORT | International application No. |
|---|---|
| | PCT/JP2010/068124 |

A. CLASSIFICATION OF SUBJECT MATTER
*C22F1/05*(2006.01)i, *B21J5/00*(2006.01)i, *B21K1/18*(2006.01)i, *B22D11/00*
(2006.01)i, *B22D11/20*(2006.01)i, *C22C21/02*(2006.01)i, *C22C21/06*(2006.01)i

According to International Patent Classification (IPC) or to both national classification and IPC

B. FIELDS SEARCHED

Minimum documentation searched (classification system followed by classification symbols)
C22F1/04-1/057, B21J5/00, B21K1/18, B22D11/00, B22D11/20, C22C21/00-21/18

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 10-183287 A (Kobe Steel, Ltd.), 14 July 1998 (14.07.1998), claims; fig. 2 (Family: none) | 1-4 |
| A | JP 2002-294383 A (Showa Denko Kabushiki Kaisha), 09 October 2002 (09.10.2002), claims; paragraphs [0003], [0039] to [0042] (Family: none) | 1-4 |
| A | JP 11-043798 A (Fujikura Ltd., Kabushiki Kaisha Miyaki), 16 February 1999 (16.02.1999), claims; paragraph [0010] (Family: none) | 1-4 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 January, 2011 (06.01.11) | 18 January, 2011 (18.01.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002070902 A
- JP 2004232087 A
- JP 2002232087 A
- JP 2009239295 A